# EUROPÄISCHE PATENTANMELDUNG

(11) **EP 3 336 446 A2**
(43) Veröffentlichungstag der Anmeldung: **20.06.2018**
(21) Anmeldenummer: 17204853.0
(22) Anmeldetag: 01.12.2017
(51) Int. Cl.: F24H 4/04, F24H 9/20, F24D 17/02, F24D 19/10, F28D 20/00

(54) **HEIZSYSTEM UND VERFAHREN ZUM BETRIEB EINES HEIZSYSTEMS**

(30) Priorität: 12.12.2016 DE 102016224661
(71) Anmelder: Robert Bosch GmbH, 70442 Stuttgart (DE)
(72) Erfinder: Mueller, Niclas, 55270 Zornheim (DE); Stumpp, Hermann, 73730 Esslingen (DE); Strobel, Christoph, 73230 Kirchheim/Teck (DE)

(57) **Zusammenfassung**

Die Erfindung geht aus von einem Heizsystem zur Bereitstellung von Wärmeenergie mit einer Wärmepumpe (12a; 12b; 12c), welche zu einer Erzeugung einer Wärmeenergie vorgesehen ist, mit zumindest einer Speichereinheit (14a; 14b; 14c) zur Speicherung der Wärmeenergie, wobei die Speichereinheit (14a; 14b; 14c) zumindest eine erste Speicherzone (16a; 16b; 16c) und eine zweite Speicherzone (18a; 18b; 18c) umfasst, und mit zumindest einer Speicherbeladeeinheit (20a; 20b; 20c), die fluidtechnisch mit der ersten Speicherzone (16a; 16b; 16c) und der zweiten Speicherzone (18a; 18b; 18c) verbunden ist und die dazu vorgesehen ist, die Speichereinheit (14a; 14b; 14c) mit der von der Wärmepumpe (12a; 12b; 12c) erzeugten Wärmeenergie zu beladen.

Es wird vorgeschlagen, dass sowohl die erste Speicherzone (16a; 16b; 16c) als auch die zweite Speicherzone (18a; 18b; 18c) der Speichereinheit (14a; 14b; 14c) mittels der Speicherbeladeeinheit (20a; 20b; 20c) mit der von der Wärmepumpe (12a; 12b; 12c) erzeugten Wärmeenergie beladbar ist.

## Beschreibung

### Stand der Technik

Es ist bereits ein Heizsystem zur Bereitstellung von Wärmeenergie mit einer Wärmepumpe, welche zu einer Erzeugung einer Wärmeenergie vorgesehen ist, mit zumindest einer Speichereinheit zur Speicherung der Wärmeenergie, wobei die Speichereinheit zumindest eine erste und eine zweite Speicherzone umfasst, und mit zumindest einer Speicherbeladeeinheit, die fluidtechnisch mit der ersten und der zweiten Speicherzone verbunden ist und die dazu vorgesehen ist, die Speichereinheit mit der von der Wärmepumpe erzeugten Wärmeenergie zu beladen, bekannt.

### Offenbarung der Erfindung

Die Erfindung geht aus von einem Heizsystem zur Bereitstellung von Wärmeenergie mit einer Wärmepumpe, welche zu einer Erzeugung einer Wärmeenergie vorgesehen ist, mit zumindest einer Speichereinheit zur Speicherung der Wärmeenergie, wobei die Speichereinheit zumindest eine erste Speicherzone und eine zweite Speicherzone umfasst, und mit zumindest einer Speicherbeladeeinheit, die fluidtechnisch mit der ersten Speicherzone und der zweiten Speicherzone verbunden ist und die dazu vorgesehen ist, die Speichereinheit mit der von der Wärmepumpe erzeugten Wärmeenergie zu beladen.

Es wird vorgeschlagen, dass sowohl die erste Speicherzone als auch die zweite Speicherzone der Speichereinheit mittels der Speicherbeladeeinheit mit der von der Wärmepumpe erzeugten Wärmeenergie beladbar ist.

Unter einem "Heizsystem" soll insbesondere ein System verstanden werden, welches insbesondere zu einem Aufstellen innerhalb eines Gebäudes vorgesehen ist und welches zu einer Erzeugung und/oder Speicherung und/oder Verteilung thermischer Energie vorgesehen ist, insbesondere in fluider Form, vorzugsweise in Form von Wasser. Insbesondere kann das Heizungssystem zur Erwärmung und/oder Speicherung und/oder Verteilung von Trink- und/oder Brauchwasser und/oder zur Versorgung zumindest eines Heizkreises vorgesehen sein. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Unter einer "Wärmepumpe" soll in diesem Zusammenhang insbesondere eine Einheit verstanden werden, welche dazu vorgesehen ist, unter Aufwendung technischer Arbeit Wärmeenergie aus einem Reservoir niedriger Temperatur, insbesondere aus einer Umgebung der Wärmepumpe, aufzunehmen und, insbesondere zusammen mit einer Antriebsenergie, als Nutzwärme auf ein zu beheizendes System mit höherer Temperatur zu übertragen. Insbesondere weist die Wärmepumpe zumindest einen insbesondere elektromotorisch angetriebenen Kompressor auf. Vorzugsweise ist die Wärmepumpe dazu vorgesehen, ein Fluid, insbesondere Wasser, zu erhitzen und insbesondere einer Speichereinheit, insbesondere einem Warmwasserspeicher, zuzuführen.

Unter einer "Speichereinheit" soll in diesem Zusammenhang insbesondere eine Einheit verstanden werden, welche dazu vorgesehen ist, von einem Wärmeerzeuger erzeugte Wärmeenergie, insbesondere mittels eines Speichermediums, zumindest temporär zu speichern. Insbesondere ist die Speichereinheit als ein Warmwasserspeicher, insbesondere als ein Trinkwasserspeicher, ausgebildet. Unter einem Warmwasserspeicher soll in diesem Zusammenhang insbesondere eine Einheit mit zumindest einem Speichertank verstanden werden, welcher dazu vorgesehen ist, Wasser als Speichermedium für insbesondere mittels zumindest eines Wärmeerzeugers erzeugte Wärmeenergie zumindest temporär aufzunehmen. Die mittels eines Wärmeerzeugers, insbesondere mittels der Wärmepumpe, erzeugte Wärmeenergie kann insbesondere über zumindest einen Wärmeübertrager an das Wasser übertragen werden. Insbesondere ist die Speichereinheit als eine Mehrzonenspeichereinheit ausgebildet, welche zumindest eine erste Speicherzone und zumindest eine zweite Speicherzone umfasst. Die Speicherzonen sind innerhalb der Speichereinheit insbesondere zumindest im Wesentlichen horizontal übereinander angeordnet. Insbesondere ist die erste Speicherzone oberhalb der zweiten Speicherzone angeordnet. Alternativ können die Speicherzonen in zumindest zwei insbesondere physikalisch getrennten und hydraulisch seriell miteinander verschalteten Speichertanks angeordnet sein, welche beispielsweise nebeneinander angeordnet sein können. Insbesondere sind die Speicherzonen der Speichereinheit separat oder zeitgleich mit Wärmeenergie beladbar. Darunter, dass eine Speichereinheit "beladen" wird, soll in diesem Zusammenhang insbesondere verstanden werden, dass eine Wärmeenergie direkt und/oder indirekt in ein Speichermedium, welches in der Speichereinheit gespeichert ist, eingebracht wird. Unter einer "Speicherbeladeeinheit" soll in diesem Zusammenhang insbesondere eine hydraulische Schaltung verstanden werden, welche dazu vorgesehen ist, der ersten Speicherzone und/oder der zweiten Speicherzone der Speichereinheit zumindest einen Teil der von der Wärmepumpe erzeugten Wärmeenergie zuzuführen. Insbesondere weist die Speicherbeladeeinheit Verbindungsleitungen, insbesondere Rohrleitungen, und/oder hydraulische Schaltelemente, beispielswiese Ventile und/oder Pumpen, auf, welche dazu vorgesehen sind, die Wärmepumpe in Abhängigkeit von einer Schaltstellung der Speicherbeladeeinheit fluidtechnisch und/oder thermisch mit der ersten Speicherzone und/oder der zweiten Speicherzone der Speichereinheit zu koppeln.

Durch eine derartige Ausgestaltung kann ein gattungsgemäßes Heizsystem mit verbesserten Betriebseigenschaften bereitgestellt werden. Insbesondere kann durch die Nutzung einer Wärmepumpe zur Beladung aller Speicherzonen der Speichereinheit eine vorteilhaft effiziente und/oder ökologische Beladung der Speichereinheit, insbesondere zur Warmwasserbereitung, erreicht werden.

Ferner wird vorgeschlagen, dass die Speicherbeladeeinheit dazu vorgesehen ist, die von der Wärmepumpe erzeugte Wärmeenergie der ersten Speicherzone und/oder der zweiten Speicherzone in Abhängigkeit von zumindest einem Betriebskennwert zuzuführen. Unter einem "Betriebskennwerf soll in diesem Zusammenhang insbesondere ein Parameter verstanden werden, welcher zumindest eine Information über einen Betriebszustand und/oder über einen Funktionszustand des Heizsystems und/oder der Speichereinheit des Heizsystems enthält. Insbesondere kann der der Betriebskennwert zumindest teilweise von zumindest einem Temperaturkennwert und/oder zumindest einem Energiekennwert gebildet sein. Insbesondere kann die Beladung der ersten Speicherzone und/oder der zweiten Speicherzone mittels der Wärmepumpe zumindest in Abhängigkeit von zumindest einer Temperatur innerhalb der ersten Speicherzone und/oder der zweiten Speicherzone erfolgen. Insbesondere kann zunächst eine effiziente Vorwärmung der unteren zweiten Speicherzone bei optimierter Leistung und Vorlauftemperatur der Wärmepumpe erfolgen, bevor die obere erste Speicherzone auf eine Bereitschaftstemperatur erwärmt wird. Hierdurch kann eine Beladung der Speichereinheit, insbesondere zu einer Warmwasserbereitung, vorteilhaft effizient erfolgen.

Des Weiteren wird vorgeschlagen, dass die Speicherbeladeeinheit eine Ventileinheit aufweist, welche dazu vorgesehen ist, zumindest eine Fluidleitung zu einem Beladen der ersten Speicherzone und/oder der zweiten Speicherzone freizugeben. Alternativ oder zusätzlich kann die Speicherbeladeeinheit zumindest eine Pumpeneinheit aufweisen, welche dazu vorgesehen ist, die von der Wärmepumpe erzeugte Wärmeenergie in die erste Speicherzone und/oder in die zweite Speicherzone zu pumpen. Hierdurch kann eine vorteilhaft einfache Umschaltung zwischen den Speicherzonen der Speichereinheit erfolgen.

Zudem wird vorgeschlagen, dass das Heizsystem eine Stromerzeugungseinheit aufweist, welche dazu vorgesehen ist, zumindest die Wärmepumpe mit elektrischer Energie zu versorgen. Vorzugsweise ist die Stromerzeugungseinheit als eine Photovoltaikeinheit ausgebildet. Insbesondere ist die Stromerzeugungseinheit ferner dazu vorgesehen, zumindest ein Hausstromnetz mit elektrischer Energie zu versorgen. Ferner kann die Stromerzeugungseinheit dazu vorgesehen sein, eine Energieüberproduktion in ein öffentliches Stromversorgungsnetz einzuspeisen. Vorzugsweise weist das Heizsystem zumindest eine Steuer- und/oder Regeleinheit auf, welche dazu vorgesehen ist, zumindest die Wärmepumpe zumindest in Abhängigkeit von einer Energieüberproduktion der Stromerzeugungseinheit zu steuern und/oder zu regeln. Unter einer "Steuer- und/oder Regeleinheit" soll insbesondere eine Einheit mit zumindest einer Steuerelektronik verstanden werden. Unter einer "Steuerelektronik" soll insbesondere eine Einheit mit einer Prozessoreinheit und mit einer Speichereinheit sowie mit einem in der Speichereinheit gespeicherten Betriebsprogramm verstanden werden. Des Weiteren wird vorgeschlagen, dass das Heizsystem zumindest eine Steuer-und/oder Regeleinheit aufweist, welche dazu vorgesehen ist, zumindest die Speicherbeladeeinheit zumindest in Abhängigkeit von einer Energieüberproduktion der Stromerzeugungseinheit zu steuern und/oder zu regeln. Insbesondere weist die Steuer- und/oder Regeleinheit zumindest eine Messeinheit auf, welche dazu vorgesehen ist, eine Abgabe elektrischer Energie der Stromerzeugungseinheit zu erfassen und insbesondere eine Einspeisung einer Energieüberproduktion durch die Stromerzeugungseinheit zu detektieren. Bei Vorliegen einer Energieüberproduktion ist die Steuer- und/oder Regeleinheit insbesondere dazu vorgesehen, die Wärmepumpe anzusteuern und die Speicherbeladeeinheit derart anzusteuern, dass die erste und/oder zweite Speicherzone der Speichereinheit mit von der Wärmepumpe erzeugten Wärmeenergie beladen wird. Die Steuer- und/oder Regeleinheit ist insbesondere dazu vorgesehen, die Leistung der Wärmepumpe an eine Energieüberproduktion der Stromerzeugungseinheit anzupassen. Hierdurch kann eine Energieüberproduktion der Stromerzeugungseinheit vorteilhaft in Form von Wärmeenergie gespeichert werden.

Zudem wird vorgeschlagen, dass das Heizsystem einen Anschluss an ein Stromversorgungsnetz aufweist, welcher dazu vorgesehen ist, zumindest die Wärmepumpe mit elektrischer Energie zu versorgen. Vorzugsweise ist der Anschluss als ein überwachter, insbesondere als ein von der Steuer- und/oder Regeleinheit steuerbarer und/oder regelbarer Anschluss ausgebildet. Bei dem Stromversorgungsnetz kann es sich um ein öffentliches Stromversorgungsnetz eines Stromversorgers, wie beispielsweise ein Energieversorgungsunternehmen, handeln. Vorzugsweise weist das Heizsystem zumindest eine Steuer- und/oder Regeleinheit auf, welche dazu vorgesehen ist, zumindest die Wärmepumpe zumindest in Abhängigkeit von einem Tarifsignal des Stromversorgers zu steuern und/oder zu regeln. Unter einem Tarifsignal kann ein Signal des Stromversorgers verstanden werden, das über die mit dem Bezug des Stroms verbundenen Kosten informiert. Des Weiteren wird vorgeschlagen, dass das Heizsystem zumindest eine Steuer- und/oder Regeleinheit aufweist, welche dazu vorgesehen ist, zumindest die Speicherbeladeeinheit zumindest in Abhängigkeit von dem Tarifsignal des Stromversorgers zu steuern und/oder zu regeln. Bei Vorliegen eines Tarifsignals des Stromversorgers, das einen günstigen Zeitpunkt für den Strombezug signalisiert, ist die Steuer- und/oder Regeleinheit insbesondere dazu vorgesehen, die Wärmepumpe anzusteuern und die Speicherbeladeeinheit derart anzusteuern, dass die erste und/oder zweite Speicherzone der Speichereinheit mit von der Wärmepumpe erzeugter Wärmeenergie beladen wird. Die Steuer- und/oder Regeleinheit ist insbesondere dazu vorgesehen, die Leistung der Wärmepumpe an einen zur Verfügung stehenden kostengünstigen Netzstrom anzupassen. Hierdurch kann Strom aus dem Stromversorgungsnetz vorteilhaft in Form von Wärmeenergie gespeichert werden.

Die Stromerzeugungseinheit und der Anschluss an das Stromversorgungsnetz können entweder alternativ oder einander ergänzend vorgesehen sein. Für eine Ausführungsform des Heizsystems, bei dem sowohl die Stromerzeugungseinheit als auch der Anschluss an das Stromversorgungsnetz vorhanden sind, wird ferner vorgeschlagen, dass das Heizsystem so betrieben wird, dass der jeweils kostengünstigste Strom zumindest die Wärmepumpe mit elektrischer Energie versorgt.

Ferner wird vorgeschlagen, dass das Heizsystem zumindest einen Wärmeübertrager aufweist, der dazu vorgesehen ist, die von der Wärmepumpe erzeugte Wärmeenergie auf die erste Speicherzone und/oder die zweite Speicherzone zu übertragen. Insbesondere kann das Heizsystem für die erste Speicherzone und die zweite Speicherzone jeweils zumindest einen innerhalb der Speichereinheit angeordneten Rohrwärmeübertrager, insbesondere Rohrwendelwärmeübertrager, aufweisen. Alternativ kann das Heizsystem zumindest einen außerhalb der Speichereinheit angeordneten Plattenwärmeübertrager aufweisen, welcher zu einer Beladung der ersten Speicherzone und der zweiten Speicherzone vorgesehen ist. Hierdurch kann eine vorteilhafte Übertragung der von der Wärmepumpe erzeugten Wärmeenergie auf die Speicherzonen der Speichereinheit, insbesondere auf ein Speichermedium, erfolgen.

Zudem wird ein Verfahren zum Betrieb eines Heizsystems nach einem der vorhergehenden Ansprüche mit einer Wärmepumpe, welche zu einer Erzeugung einer Wärmeenergie vorgesehen ist, mit zumindest einer Speichereinheit zur Speicherung der Wärmeenergie, wobei die Speichereinheit zumindest eine erste und eine zweite Speicherzone umfasst, vorgeschlagen, wobei sowohl die erste Speicherzone als auch die zweite Speicherzone der Speichereinheit mit der von der Wärmepumpe erzeugten Wärmeenergie beladen werden. Vorzugsweise werden die erste Speicherzone und/oder die zweite Speicherzone der Speichereinheit in Abhängigkeit von einer Energieüberproduktion einer Stromerzeugungseinheit und/oder in Abhängigkeit eines Tarifsignals von einem Stromversorger mit der von der Wärmepumpe erzeugten Wärmeenergie beladen. Insbesondere wird bei Nichtvorliegen einer Energieüberproduktion durch die Stromerzeugungseinheit die obere erste Speicherzone der Speichereinheit bis zu einem Erreichen einer Speichersolltemperatur mit von der Wärmepumpe erzeugten Wärmeenergie beladen. Bei Vorliegen einer Energieüberproduktion durch die Stromerzeugungseinheit oder Verfügbarkeit von kostengünstigem Strom aus dem Stromversorgungsnetz wird die untere zweite Speicherzone der Speichereinheit mit von der Wärmepumpe erzeugter Wärmeenergie beladen. Insbesondere wird die zweite Speicherzone dann beladen, wenn die Wärmeenergie kostengünstiger als zu anderen Zeiten zur Verfügung steht. Insbesondere wird die Leistung der Wärmepumpe bei Vorliegen einer Energieüberproduktion an die Energieüberproduktion angepasst. Alternativ können bei Vorliegen einer Energieüberproduktion die erste Speicherzone und die zweite Speicherzone der Speichereinheit parallel mit von der Wärmepumpe erzeugter Wärmeenergie beladen werden. Hierdurch kann eine vorteilhaft effiziente und/oder ökologische Beladung der Speichereinheit, insbesondere zur Warmwasserbereitung, erreicht werden. Ferner kann eine Energieüberproduktion einer Stromerzeugungseinheit vorteilhaft in Form von Wärmeenergie gespeichert werden.

Das erfindungsgemäße Heizsystem und/oder das erfindungsgemäße Verfahren soll/sollen hierbei nicht auf die oben beschriebene Anwendung und Ausführungsform beschränkt sein. Insbesondere kann das erfindungsgemäße Heizsystem und/oder das erfindungsgemäße Verfahren zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In der Zeichnung sind drei Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigt:
- Fig. 1: eine schematische Darstellung eines Heizsystems mit einer Wärmepumpe und einer Speichereinheit mit zwei Speicherzonen, welche beide von der Wärmepumpe beladen werden,
- Fig. 2: eine schematische Darstellung eines alternativen Heizsystems mit einer Wärmepumpe und einer Speichereinheit mit zwei Speicherzonen, welche beide von der Wärmepumpe beladen werden und
- Fig. 3: eine schematische Darstellung eines weiteren alternativen Heizsystems mit einer Wärmepumpe und einer Speichereinheit mit zwei Speicherzonen, welche beide von der Wärmepumpe beladen werden.

### Beschreibung der Ausführungsbeispiele

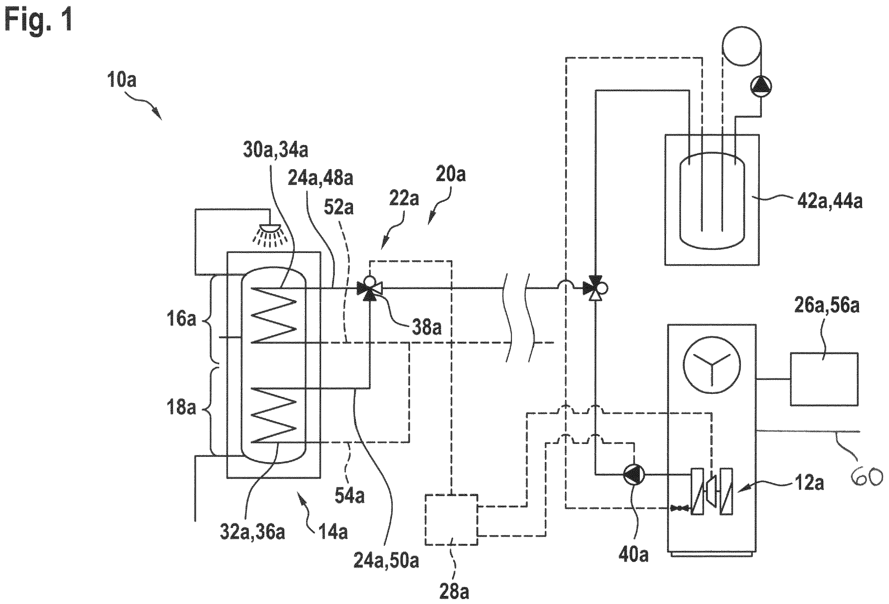

Figur 1 zeigt eine schematische Darstellung eines Heizsystems 10a zur Bereitstellung von Wärmeenergie. Das Heizsystem 10a weist eine insbesondere elektrisch betriebene Wärmepumpe 12a auf, welche zu einer Erzeugung einer Wärmeenergie vorgesehen ist. Ferner weist das Heizsystem 10a eine Speichereinheit 14a zur Speicherung der Wärmeenergie auf. Die Speichereinheit 14a umfasst zumindest eine erste Speicherzone 16a und eine zweite Speicherzone 18a. Die Speichereinheit 14a ist insbesondere als ein Warmwasserspeicher, insbesondere als ein Trinkwasserspeicher, ausgebildet. Die Speicherzonen 16a, 18a sind innerhalb der Speichereinheit 14a zumindest im Wesentlichen horizontal übereinander angeordnet. Insbesondere ist die erste Speicherzone 16a oberhalb der zweiten Speicherzone 18a angeordnet. Des Weiteren weist das Heizsystem 10a eineSpeicherbeladeeinheit 20a auf, die fluidtechnisch mit der ersten Speicherzone 16a und der zweiten Speicherzone 18a verbunden ist. Die Speicherbeladeeinheit 20a ist dazu vorgesehen, die Speichereinheit 14a mit der von der Wärmepumpe 12a erzeugten Wärmeenergie zu beladen. Sowohl die erste Speicherzone 16a als auch die zweite Speicherzone 18a der Speichereinheit 14a ist mittels der Speicherbeladeeinheit 20a mit der von der Wärmepumpe 12a erzeugten Wärmeenergie beladbar. Insbesondere sind die Speicherzonen 16a, 18a der Speichereinheit 14a separat oder zeitgleich mit von der Wärmepumpe 12a erzeugter Wärmeenergie beladbar. Das Heizsystem 10a weist zwei Wärmeübertrager 30a, 32a auf, welche dazu vorgesehen sind, die von der Wärmepumpe 12a erzeugte Wärmeenergie auf die erste Speicherzone 16a und/oder die zweite Speicherzone 18a zu übertragen. Insbesondere weist das Heizsystem 10a für die erste Speicherzone 16a und die zweite Speicherzone 18a jeweils zumindest einen innerhalb der Speichereinheit 14a angeordneten Rohrwärmeübertrager 34a, 36a, insbesondere Rohrwendelwärmeübertrager, auf. Jede Speicherzone 16a, 18a weist jeweils einen Speichereinlass 48a, 50a und einen Speicherauslass 52a, 54a auf. Die Speicherbeladeeinheit 20a weist eine Ventileinheit 22a auf, welche dazu vorgesehen ist, zumindest eine Fluidleitung 24a zu einem Beladen der ersten Speicherzone 16a und/oder der zweiten Speicherzone 18a freizugeben. Die Ventileinheit 22a weist ein Dreiwegeventil 38a auf. Die Speicherbeladeeinheit 20a ist dazu vorgesehen, die von der Wärmepumpe 12a erzeugte Wärmeenergie der ersten Speicherzone 16a und/oder der zweiten Speicherzone 18a in Abhängigkeit von zumindest einem Betriebskennwert zuzuführen.

Zudem weist das Heizsystem 10a eine Speicherladepumpe 40a auf, welche dazu vorgesehen ist, ein von der Wärmepumpe 12a erwärmtes Heizfluid zu fördern.

Ferner weist das Heizsystem 10a eine Stromerzeugungseinheit 26a auf, welche in zumindest einem Betriebszustand dazu vorgesehen ist, zumindest die Wärmepumpe 12a mit elektrischer Energie zu versorgen. Die Stromerzeugungseinheit 26a ist vorzugsweise als eine Photovoltaikeinheit 56a ausgebildet ist. Insbesondere ist die Stromerzeugungseinheit 26a ferner dazu vorgesehen, zumindest ein Hausstromnetz mit elektrischer Energie zu versorgen. Ferner kann die Stromerzeugungseinheit 26a dazu vorgesehen sein, eine Energieüberproduktion in ein öffentliches Stromversorgungsnetz einzuspeisen. Ferner weist das Heizsystem 10a zumindest eine Steuer- und/oder Regeleinheit 28a auf, welche dazu vorgesehen ist, die Wärmepumpe 12a zumindest in Abhängigkeit von einer Energieüberproduktion der Stromerzeugungseinheit 26a zu steuern und/oder zu regeln. Ferner ist die Steuer- und/oder Regeleinheit 28a dazu vorgesehen, die Speicherbeladeeinheit 20a zumindest in Abhängigkeit von einer Energieüberproduktion der Stromerzeugungseinheit 26a zu steuern und/oder zu regeln.

Ferner weist das Heizsystem 10a einen Anschluss 60 an ein Stromversorgungsnetz auf. Der Anschluss ist dazu eingerichtet, zumindest die Wärmepumpe 12a in zumindest einem Betriebszustand mit elektrischer Energie zu versorgen. Beispielsweise ist der Anschluss an das Stromversorgungsnetz parallel geschaltet zu der Stromerzeugungseinheit 26a oder alternativ zu der Stromerzeugungseinheit 26a vorhanden. Ferner weist das Heizsystem 10a zumindest eine Steuer- und/oder Regeleinheit 28a auf, welche dazu vorgesehen ist, die Wärmepumpe 12a zumindest in Abhängigkeit von einem Tarifsignal eines Stromversorgers zu steuern und/oder zu regeln. Ferner ist die Steuer- und/oder Regeleinheit 28a dazu vorgesehen, die Speicherbeladeeinheit 20a zumindest in Abhängigkeit von einem Tarifsignal eines Stromversorgers zu steuern und/oder zu regeln. Der Stromversorger betreibt das Stromversorgungsnetz.

Zu einer Beladung der ersten Speicherzone 16a werden bei einem Unterschreiten einer Speichersolltemperatur die Wärmepumpe 12a und die Speicherladepumpe 40a gestartet. Die Ventileinheit 22a wird so geschaltet, dass die erste Speicherzone 16a mit von der Wärmepumpe 12a erzeugter Wärmeenergie beladen wird. Bei Erreichen der Speichersolltemperatur in der ersten Speicherzone 16a werden die Wärmepumpe 12a und die Speicherladepumpe 40a abgeschaltet. Alternativ zu einer Abschaltung kann die von der Wärmepumpe 12a erzeugte Wärmeenergie einer weiteren Wärmesenke 42a, beispielsweise einem Heizkreis 44a, zugeführt werden.

Die Wärmepumpe 12a weist eine hier nicht dargestellte Signalschnittstelle zu einem Stromzähler, welcher misst wie viel Strom aus einem öffentlichen Stromnetz bezogen wird, oder einer Energiemanagementeinheit auf, um eine Energieüberproduktion der Stromerzeugungseinheit 26a zu detektieren. Sollte Strom von der Stromerzeugungseinheit 26a in das öffentliche Stromnetz eingespeist werden, also eine Energieüberproduktion vorliegen, werden die Wärmepumpe 12a und die Speicherladepumpe 40a in Betrieb gesetzt. Die Ventileinheit 22a wird so geschaltet, dass die zweite Speicherzone 18a mit von der Wärmepumpe 12a erzeugter Wärmeenergie beladen wird. Die Speichereinheit 14a kann solange beladen werden, bis eine maximale Vorlauftemperatur der Wärmepumpe 12a erreicht ist. Vorteilhaft wir die Leistung der Wärmepumpe 12a während eines Beladens der zweiten Speicherzone 18a an die Energieüberproduktion der Stromerzeugungseinheit 26a angepasst. Bei einer erhöhten Leistungsanforderung kann die Ventileinheit 22a in eine Zwischenstellung gebracht werden, so dass die Speichereinheit 14a parallel über beide Speicherzonen 16a,18a beladen wird.

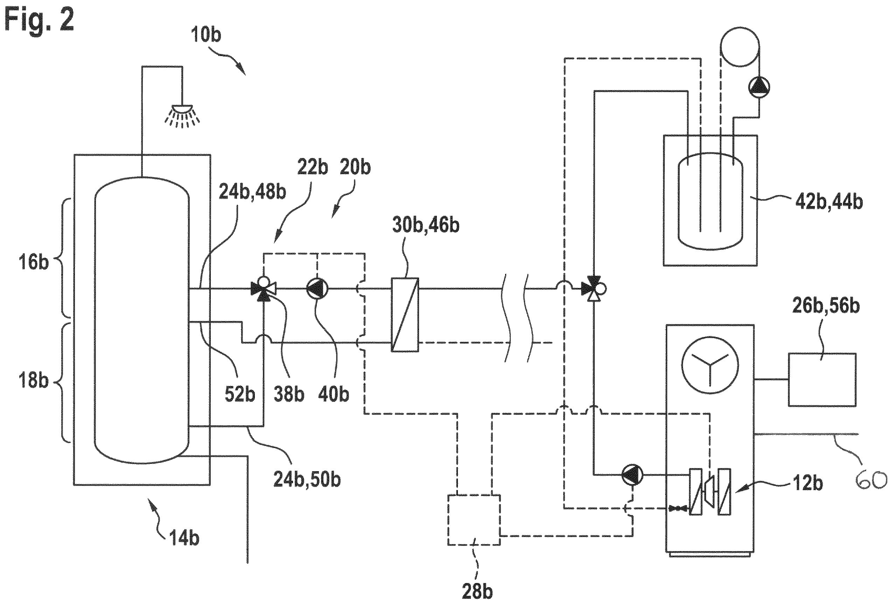

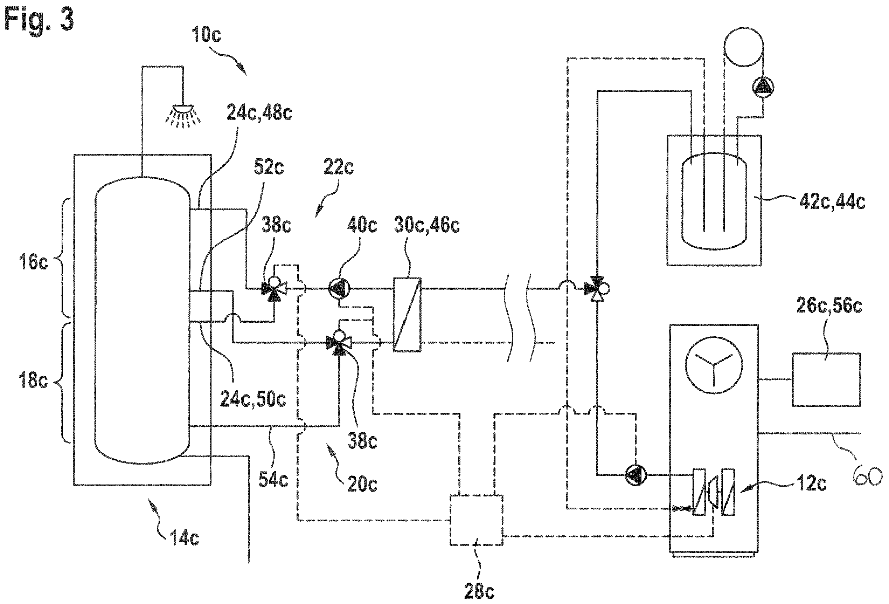

In den Figuren 2 und 3 sind zwei weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figur 1, verwiesen werden kann. Zur Unterscheidung der Ausführungsbeispiele ist der Buchstabe a den Bezugszeichen des Ausführungsbeispiels in der Figur 1 nachgestellt. In den Ausführungsbeispielen der Figuren 2 und 3 ist der Buchstabe a durch die Buchstaben b und c ersetzt.

Figur 2 zeigt eine schematische Darstellung eines alternativen Heizsystems 10b zur Bereitstellung von Wärmeenergie. Das Heizsystem 10b weist eine insbesondere elektrisch betriebene Wärmepumpe 12b auf, welche zu einer Erzeugung einer Wärmeenergie vorgesehen ist. Ferner weist das Heizsystem 10b eine Speichereinheit 14b zur Speicherung der Wärmeenergie auf. Die Speichereinheit 14b umfasst zumindest eine erste Speicherzone 16b und eine zweite Speicherzone 18b. Des Weiteren weist das Heizsystem 10b eine Speicherbeladeeinheit 20b auf, die fluidtechnisch mit der ersten Speicherzone 16b und der zweiten Speicherzone 18b verbunden ist. Die Speicherbeladeeinheit 20b ist dazu vorgesehen, die Speichereinheit 14b mit der von der Wärmepumpe 12b erzeugten Wärmeenergie zu beladen. Sowohl die erste Speicherzone 16b als auch die zweite Speicherzone 18b der Speichereinheit 14b ist mittels der Speicherbeladeeinheit 20b mit der von der Wärmepumpe 12b erzeugten Wärmeenergie beladbar. Das Heizsystem 10b weist einen Wärmeübertrager 30b auf, welcher dazu vorgesehen ist, die von der Wärmepumpe 12b erzeugte Wärmeenergie auf die erste Speicherzone 16b und/oder die zweite Speicherzone 18b zu übertragen. Der Wärmeübertrager 30b ist insbesondere als ein der Speichereinheit 14a vorgeschalteter und außerhalb der Speichereinheit 14a angeordneter Plattenwärmeübertrager 46b ausgebildet. Die Speichereinheit 14b weist einen Speicherauslass 52b auf, welcher zumindest im Wesentlichen in einem mittleren Speicherbereich der Speichereinheit 14b angeordnet ist. Ein Speichereinlass 48b zur Beladung der ersten Speicherzone 16b ist in einem oberen Speicherbereich der Speichereinheit 14b angeordnet. Ein Speichereinlass 50b zur Beladung der zweiten Speicherzone 18b ist in einem unteren Speicherbereich der Speichereinheit 14b angeordnet. Die Speicherbeladeeinheit 20b weist eine Ventileinheit 22b auf, welche dazu vorgesehen ist, zumindest eine Fluidleitung 24b zu einem Beladen der ersten Speicherzone 16b und/oder der zweiten Speicherzone 18b freizugeben. Die Ventileinheit 22b weist ein Dreiwegeventil 38b auf. Die Speicherbeladeeinheit 20b ist dazu vorgesehen, die von der Wärmepumpe 12b erzeugte Wärmeenergie der ersten Speicherzone 16b und/oder der zweiten Speicherzone 18b in Abhängigkeit von zumindest einem Betriebskennwert zuzuführen. Zudem weist das Heizsystem 10b eine Speicherladepumpe 40b auf, welche dazu vorgesehen ist, ein erwärmtes Heizfluid zu fördern.

Ferner weist das Heizsystem 10b eine Stromerzeugungseinheit 26b auf, welche in zumindest einem Betriebszustand dazu vorgesehen ist, zumindest die Wärmepumpe 12b mit elektrischer Energie zu versorgen. Die Stromerzeugungseinheit 26b ist vorzugsweise als eine Photovoltaikeinheit ausgebildet. Insbesondere ist die Stromerzeugungseinheit 26a ferner dazu vorgesehen, zumindest ein Hausstromnetz mit elektrischer Energie zu versorgen. Ferner kann die die Stromerzeugungseinheit 26b dazu vorgesehen sein, eine Energieüberproduktion in ein öffentliches Stromversorgungsnetz einzuspeisen. Ferner weist das Heizsystem 10b zumindest eine Steuer- und/oder Regeleinheit 28b auf, welche dazu vorgesehen ist, die Wärmepumpe 12b zumindest in Abhängigkeit von einer Energieüberproduktion der Stromerzeugungseinheit 26b zu steuern und/oder zu regeln. Ferner ist die Steuer- und/oder Regeleinheit 28b dazu vorgesehen, die Speicherbeladeeinheit 20b zumindest in Abhängigkeit von einer Energieüberproduktion der Stromerzeugungseinheit 26b zu steuern und/oder zu regeln.

Ein Verfahren zu einer Beladung der Speichereinheit 14b entspricht dem zum Ausführungsbeispiel aus Figur 1 beschriebenen Verfahren.

Figur 3 zeigt eine schematische Darstellung eines alternativen Heizsystems 10c zur Bereitstellung von Wärmeenergie. Das Heizsystem 10c weist eine insbesondere elektrisch betriebene Wärmepumpe 12c auf, welche zu einer Erzeugung einer Wärmeenergie vorgesehen ist. Ferner weist das Heizsystem 10c eine Speichereinheit 14c zur Speicherung der Wärmeenergie auf. Die Speichereinheit 14c umfasst zumindest eine erste Speicherzone 16c und eine zweite Speicherzone 18c. Des Weiteren weist das Heizsystem 10c eine Speicherbeladeeinheit 20c auf, die fluidtechnisch mit der ersten Speicherzone 16c und der zweiten Speicherzone 18c verbunden ist. Die Speicherbeladeeinheit 20c ist dazu vorgesehen, die Speichereinheit 14c mit der von der Wärmepumpe 12c erzeugten Wärmeenergie zu beladen. Sowohl die erste Speicherzone 16c als auch die zweite Speicherzone 18c der Speichereinheit 14c ist mittels der Speicherbeladeeinheit 20c mit der von der Wärmepumpe 12b erzeugten Wärmeenergie beladbar. Das Heizsystem 10c weist einen Wärmeübertrager 30c auf, welcher dazu vorgesehen ist, die von der Wärmepumpe 12c erzeugte Wärmeenergie auf die erste Speicherzone 16c und/oder die zweite Speicherzone 18c zu übertragen. Der Wärmeübertrager 30c ist insbesondere als ein der Speichereinheit 14c vorgeschalteter und außerhalb der Speichereinheit 14c angeordneter Plattenwärmeübertrager 46c ausgebildet. Die Speichereinheit 14c für die erste Speicherzone 16a und die zweite Speicherzone 18a weist jeweils einen Speichereinlass 48c, 50c und jeweils einen Speicherauslass 52c, 54c auf. Die Speicherbeladeeinheit 20c weist eine Ventileinheit 22c auf, welche dazu vorgesehen ist, zumindest eine Fluidleitung 24c zu einem Beladen der ersten Speicherzone 16c und/oder der zweiten Speicherzone 18c freizugeben. Die Ventileinheit 22c weist zwei Dreiwegeventile 38c auf. Die zwei Dreiwegeventile 38c ermöglichen es, dass bei Speicherzonen 16c, 18c sowohl von oben nach unten beladen werden können. Die Speicherbeladeeinheit 20c ist dazu vorgesehen, die von der Wärmepumpe 12c erzeugte Wärmeenergie der ersten Speicherzone 16c und/oder der zweiten Speicherzone 18c in Abhängigkeit von zumindest einem Betriebskennwert zuzuführen. Zudem weist das Heizsystem 10c eine Speicherladepumpe 40c auf, welche dazu vorgesehen ist, ein von der Wärmepumpe 12c erwärmtes Heizfluid zu fördern.

Ferner weist das Heizsystem 10c eine Stromerzeugungseinheit 26c auf, welche in zumindest einem Betriebszustand dazu vorgesehen ist, zumindest die Wärmepumpe 12c mit elektrischer Energie zu versorgen. Die Stromerzeugungseinheit 26c ist vorzugsweise als eine Photovoltaikeinheit ausgebildet. Insbesondere ist die Stromerzeugungseinheit 26a ferner dazu vorgesehen, zumindest ein Hausstromnetz mit elektrischer Energie zu versorgen. Ferner kann die Stromerzeugungseinheit 26c dazu vorgesehen sein, eine Energieüberproduktion in ein öffentliches Stromversorgungsnetz einzuspeisen. Ferner weist das Heizsystem 10c zumindest eine Steuer- und/oder Regeleinheit 28c auf, welche dazu vorgesehen ist, die Wärmepumpe 12c zumindest in Abhängigkeit von einer Energieüberproduktion der Stromerzeugungseinheit 26c zu steuern und/oder zu regeln. Ferner ist die Steuer- und/oder Regeleinheit 28c dazu vorgesehen, die Speicherbeladeeinheit 20c zumindest in Abhängigkeit von einer Energieüberproduktion der Stromerzeugungseinheit 26c zu steuern und/oder zu regeln.

Ein Verfahren zu einer Beladung der Speichereinheit 14c entspricht dem zum Ausführungsbeispiel aus Figur 1 beschrieben Verfahren.

## Patentansprüche

1. Heizsystem zur Bereitstellung von Wärmeenergie mit einer Wärmepumpe (12a; 12b; 12c), welche zu einer Erzeugung einer Wärmeenergie vorgesehen ist, mit zumindest einer Speichereinheit (14a; 14b; 14c) zur Speicherung der Wärmeenergie, wobei die Speichereinheit (14a; 14b; 14c) zumindest eine erste Speicherzone (16a; 16b; 16c) und eine zweite Speicherzone (18a; 18b; 18c) umfasst, und mit zumindest einer Speicherbeladeeinheit (20a; 20b; 20c), die fluidtechnisch mit der ersten Speicherzone (16a; 16b; 16c) und der zweiten Speicherzone (18a; 18b; 18c) verbunden ist und die dazu vorgesehen ist, die Speichereinheit (14a; 14b; 14c) mit der von der Wärmepumpe (12a; 12b; 12c) erzeugten Wärmeenergie zu beladen, **dadurch gekennzeichnet, dass** sowohl die erste Speicherzone (16a; 16b; 16c) als auch die zweite Speicherzone (18a; 18b; 18c) der Speichereinheit (14a; 14b; 14c) mittels der Speicherbeladeeinheit (20a; 20b; 20c) mit der von der Wärmepumpe (12a; 12b; 12c) erzeugten Wärmeenergie beladbar ist.

2. Heizsystem nach Anspruch 1, **dadurch gekennzeichnet, dass** die Speicherbeladeeinheit (20a; 20b; 20c) dazu vorgesehen ist, die von der Wärmepumpe (12a; 12b; 12c) erzeugte Wärmeenergie der ersten Speicherzone (16a; 16b; 16c) und/oder der zweiten Speicherzone (18a; 18b; 18c) in Abhängigkeit von zumindest einem Betriebskennwert zuzuführen.

3. Heizsystem nach Anspruch 1 oder 2, **dadurch gekennzeichnet, dass** die Speicherbeladeeinheit (20a; 20b; 20c) eine Ventileinheit (22a; 22b; 22c) aufweist, welche dazu vorgesehen ist, zumindest eine Fluidleitung (24a; 24b; 24c) zu einem Beladen der ersten Speicherzone (16a; 16b; 16c) und/oder der zweiten Speicherzone (18a; 18b; 18c) freizugeben.

4. Heizsystem nach einem der vorhergehenden Ansprüche, **gekennzeichnet durch** eine Stromerzeugungseinheit (26a; 26b; 26c), welche dazu vorgesehen ist, zumindest die Wärmepumpe (12a; 12b; 12c) mit elektrischer Energie zu versorgen.

5. Heizsystem nach Anspruch 4, **dadurch gekennzeichnet, dass** die Stromerzeugungseinheit (26a; 26b; 26c) als eine Photovoltaikeinheit (56a; 56b; 56c) ausgebildet ist.

6. Heizsystem nach Anspruch 4 oder 5, **gekennzeichnet durch** zumindest eine Steuer- und/oder Regeleinheit (28a; 28b; 28c), welche dazu vorgesehen ist, zumindest die Wärmepumpe (12a; 12b; 12c) zumindest in Abhängigkeit von einer Energieüberproduktion der Stromerzeugungseinheit (26a; 26b; 26c) zu steuern und/oder zu regeln.

7. Heizsystem nach einem der Ansprüche 4 bis 6, **gekennzeichnet durch** zumindest eine Steuer- und/oder Regeleinheit (28a; 28b; 28c), welche dazu vorgesehen ist, zumindest die Speicherbeladeeinheit (20a; 20b; 20c) zumindest in Abhängigkeit von einer Energieüberproduktion der Stromerzeugungseinheit (26a; 26b; 26c) zu steuern und/oder zu regeln.

8. Heizsystem nach einem der vorhergehenden Ansprüche, **gekennzeichnet durch** einen Anschluss (60) an ein Stromversorgungsnetz, welcher dazu vorgesehen ist, zumindest die Wärmepumpe (12a; 12b; 12c) mit elektrischer Energie zu versorgen.

9. Heizsystem nach Anspruch 4 oder 5, **gekennzeichnet durch** zumindest eine Steuer- und/oder Regeleinheit (28a; 28b; 28c), welche dazu vorgesehen ist, zumindest die Wärmepumpe (12a; 12b; 12c) zumindest in Abhängigkeit von einem Tarifsignal eines Stromversorgers zu steuern und/oder zu regeln.

10. Heizsystem nach einem der Ansprüche 4 bis 6, **gekennzeichnet durch** zumindest eine Steuer- und/oder Regeleinheit (28a; 28b; 28c), welche dazu vorgesehen ist, zumindest die Speicherbeladeeinheit (20a; 20b; 20c) zumindest in Abhängigkeit von einem Tarifsignal eines Stromversorgers zu steuern und/oder zu regeln.

11. Heizsystem nach einem der vorhergehenden Ansprüche, **gekennzeichnet durch** zumindest einen Wärmeübertrager (30a, 32a; 30b; 30c), der dazu vorgesehen ist, die von der Wärmepumpe (12a; 12b; 12c) erzeugte Wärmeenergie auf die erste Speicherzone (16a; 16b; 16c) und/oder die zweite Speicherzone (18a; 18b; 18c) zu übertragen.

12. Verfahren zum Betrieb eines Heizsystems (10a; 10b; 10c) nach einem der vorhergehenden Ansprüche mit einer Wärmepumpe (12a; 12b; 12c), welche zu einer Erzeugung einer Wärmeenergie vorgesehen ist, mit zumindest einer Speichereinheit (14a; 14b; 14c) zur Speicherung der Wärmeenergie, wobei die Speichereinheit (14a; 14b; 14c) zumindest eine erste Speicherzone (16a; 16b; 16c) und eine zweite Speicherzone (18a; 18b; 18c) umfasst, **dadurch gekennzeichnet, dass** sowohl die erste Speicherzone (16a; 16b; 16c) als auch die zweite Speicherzone (18a; 18b; 18c) der Speichereinheit (14a; 14b; 14c) mit der von der Wärmepumpe (12a; 12b; 12c) erzeugten Wärmeenergie beladen werden.

13. Verfahren nach Anspruch 9, **dadurch gekennzeichnet, dass** die erste Speicherzone (16a; 16b; 16c) und/oder die zweite Speicherzone (18a; 18b; 18c) der Speichereinheit (14a; 14b; 14c) in Abhängigkeit von einer Energieüberproduktion einer Stromerzeugungseinheit (26a; 26b; 26c) mit der von der Wärmepumpe (12a; 12b; 12c) erzeugten Wärmeenergie beladen werden.
